# EUROPEAN PATENT APPLICATION

(11) **EP 1 653 124 A2**
(43) Date of publication of application: **03.05.2006**
(21) Application number: 05023844.3
(22) Date of filing: 02.11.2005
(51) Int. Cl.: F16H 59/10

(54) **Rotary changeover switch**

(30) Priority: 02.11.2004 JP 2004318719
(71) Applicant: NILES CO., LTD., Tokyo 143-8521 (JP)
(72) Inventor: Watada, Tsutomu, Tokyo 143-8521 (JP); Kakegawa, Yukihiro, Tokyo 143-8521 (JP)
(74) Representative: Luderschmidt, Schüler & Partner GbR

(57) **Abstract**

A movable plate (40) provided with movable contact points (60) rotatable around a shaft hole (19) of a base plate (15) is disposed and a plurality of stationary contact points (50-52) are on the base plate in both side of the shaft hole in such a way to surround the shaft hole with the stationary contact points. The stationary contact points (50-52) are connected or disconnected to the movable points of the movable plate (40) depending on rotation of the movable plate. Location of the stationary contact points at a wide angular range enables the row number of circular arcs having the stationary contact points to be reduced, and the distance from the shaft hole to the circular arc Ce of the outermost peripheral stationary contact point is not large, thus downsizing the whole size. As a result, the material expenses of the stationary contact points are reduced.

## Description

### BACKGROUND OF THE INVENTION

### Field of the Invention

The present invention relates to a rotary changeover switch.

### The Related Art of the Invention

As a conventional rotary changeover switch, there is for example, an inhibiter switch attached to a select lever in an automatic transmission for a vehicle an example of which is proposed by Japanese Unexamined Utility Model Publication No. 6 - 68265.

This example is arranged in such a way that a switch case is formed of a base plate and a lid body, stationary contact points are disposed in the base plate and movable contact points are disposed in a movable plate rotatable in the switch case.

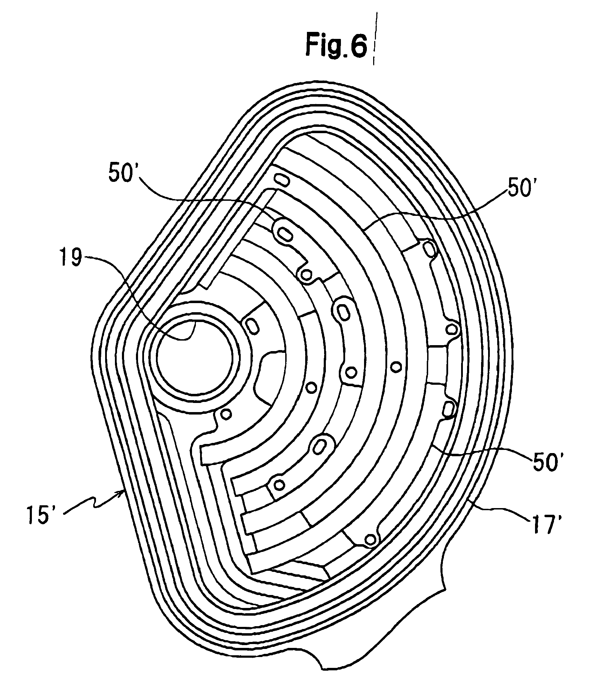

Fig. 6 shows an arrangement example of stationary contact points on a base plate in an inhibiter switch constituted in the same way as described above.

That is, a base plate 15' is formed in a fan shape centered on a shaft hole 19 passing therethrough and stationary contact points 50' are disposed on circular arcs forming a plurality of rows centered on the shaft hole 19.

A group of these stationary contact points 50' are disposed within a predetermined angular range from the shaft hole 19 and the base plate 15' is provided with a side wall 17' in the circumferential edge thereof to define an inner space of the switch case receiving these stationary contact points 50' and the movable plate (not shown) therein.

Rotation of the movable plate around the shaft hole 19 causes the movable contact points to get in contact with the stationary contact points 50', thus performing a switching effect.

In the inhibiter switch, the shaft hole 19 is disposed in the outermost corner portion of the base plate 15' and a group of the stationary contact points 50' on the base plate are collectively disposed in one direction within a predetermined angular range from the shaft hole 19.

As a result, as the row number of the circular arcs of the stationary contact points 50' increases, the distance from the shaft hole 19 to the circular arc of the outermost stationary contact point increases. As the distance from the shaft hole 19 to the circular arc of the stationary contact points 50' increases, regardless of the rotating angle of the movable plate does not change, the length of the circular arc becomes greater to increase in size the base plate 15' and the movable plate, thus increasing the whole size of the switch. Further, since the length of the stationary contact point on the circular arc becomes large, material expenses of the stationary contact point 50' becomes large, possibly increasing costs thereof.

In view of the above, there exists a need for a rotary changeover switch which overcomes the above-mentioned problems in the related art. The present invention addresses this need in the related art and also other needs, which will become apparent to those skilled in the art from this disclosure.

### SUMMARY OF THE INVENTION

The present invention, from a viewpoint of the foregoing problems, has an object of providing a rotary changeover switch, which is capable of downsizing the whole size thereof.

A rotary changeover switch according to the present invention comprises a base plate, a lid body attached to the base plate, a switch case formed of the base plate and the lid body, a movable plate disposed inside the switch case, the movable switch being rotated within a predetermined angular range, a plurality of stationary contact points disposed in an inner wall of the base plate, and a movable contact point disposed in the movable plate, the movable contact point being connected or disconnected to the stationary contact points depending on rotation of the movable plate, wherein the plurality of the stationary contact points are disposed around a rotating shaft of the movable plate across a range beyond the predetermined angular range

### ADVANTAGES OF THE INVENTION

The stationary contact points are disposed, for example, in both sides of the rotating shaft and divided by the rotating shaft and therefore, the distance from the rotating shaft to the circular arc of the outermost stationary contact point does not increase and the whole size is reduced, thus reducing material expenses of the stationary contact points.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

The preferred embodiment according to the invention will be explained below referring to the drawings, wherein:
Fig. 1 is a cross-portional view showing a construction in a preferred embodiment of the present invention;
Fig. 2 is a reduced plan view showing a base plate in the preferred embodiment of the present invention;
Fig. 3 is a view showing a construction of a welding portion in the preferred embodiment of the present invention;
Fig. 4 is a plan view showing a movable plate in the preferred embodiment of the present invention;
Fig. 5 is a cross-portional view taken on lines A - A in Fig. 5; and
Fig. 6 is a view showing a conventional example.

### DETAILED DESCRIPTION OF THE PREFERRED EMBODIMENTS

A preferred embodiment of the present invention will be hereinafter explained in detail with reference to the drawings.

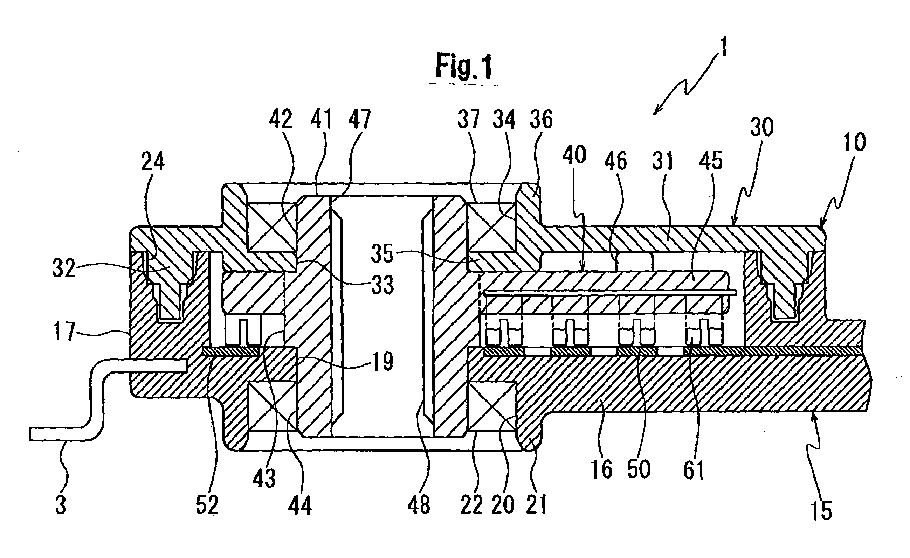

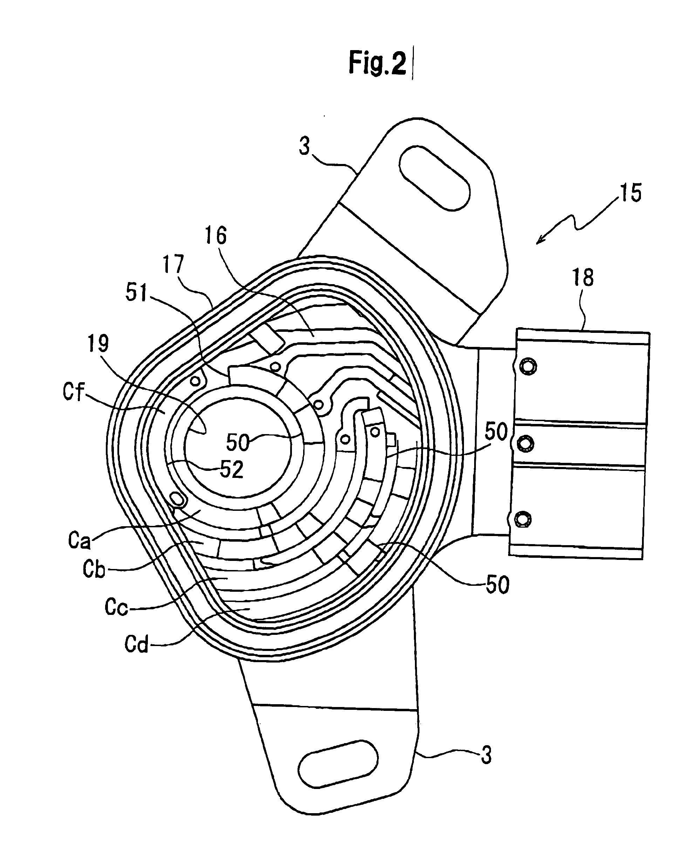

Fig. 1 is a cross-portional view showing an inhibiter switch in a preferred embodiment to which the present invention is applied and Fig. 2 is a reduced plan view showing a base plate.

An inhibiter switch 1 is provided with a switch case 10 formed of a plastic base plate 15 and a lid body 30 lapped over the plastic base plate 15 and a movable plate 40 is disposed inside the switch case 10.

The base plate 15 is composed of a terminal block 16 having stationary contact points 50 to 52, a side wall 17 uprising from the circumferential edge of the terminal block 16, and further, a connector 18 extending outwards from the side wall 17 of the terminal block 16.

The terminal block 16 is provided with a shaft hole 19 through which a shaft 41 of the movable plate 40 penetrates and a seal receiving portion 20 surrounding the shaft 19 in an outer wall surface (undersurface in Fig. 1) of the terminal block 16.

The lid body 30 is formed of a main body portion 31 in a flat shape corresponding to the terminal block 16 of the base plate 15 and a projecting portion 32 facing the side wall 17 of the base plate 17 at the circumferential edge. In addition, the main body portion 31 is provided with a shaft hole 33 through which the shaft 41 of the movable plate 40 penetrates corresponding to the shaft hole 19 of the terminal block 16 and a seal receiving portion 34 surrounding the shaft hole 33 at an outer wall surface (upper surface in Fig. 1). An inner wall surface of the main body portion 31 is a projecting portion 35 extending by a predetermined amount corresponding to the seal receiving portion 34 within a predetermined range at the circumference of the shaft hole 33.

The movable plate 40 is composed of a plastic contact point support 45 for supporting a movable contact point 60 and the shaft 41 integral with the contact point support 45. The shaft 41 is formed of an upper shaft 42 extending upwards and a lower shaft 44 extending downwards and an enlarged diameter portion 43 positioned between the upper shaft 42 and the lower shaft 44, and the contact point support 45 extends in a diameter direction from an upper half portion of the enlarged diameter portion 43.

The shaft 41 is provided with a penetrating hole 47, which is provided with key projecting portion 48 faced with each other on the diameter line.

The shaft 44 is arranged in such a way that the upper shaft 42 penetrates through the shaft hole 33 of the lid body 30 and the lower shaft 44 penetrates through the shaft hole 19 of the base plate 15. The contact point support 45 is rotatable inside the switch case 10 centered on the shaft 44.

A spacer 46 is formed on an upper surface of the contact point support 45 and as high as the projecting portion 35 of the main body portion 31 of the lid body 30.

In a state the movable plate 40 is incorporated in the switch case 10, a top end surface of the enlarged diameter portion 43 of the shaft 41 contacts the projecting portion 35 of the main body portion 31, thus regulating the upward movement of the movable plate 40 in Fig. 1 and a lower end surface of the enlarged diameter portion 43 contacts an inner wall surface of the terminal block 16, thus regulating the downward movement thereof.

The seal receiving portion 20 is provided with a retaining wall 21 uprising outwards at a position spaced by a predetermined amount from a hole edge of the shaft hole 19 and the seal receiving portion 24 is provided with a retaining wall 36 uprising outwards in the same way.

The upper shaft 42 and the lower shaft 44 of the shaft 41 extend respectively to the seal receiving portions 20 and 34 and are folded by ring-shaped seal materials 22 and 37 retained in each seal receiving portion 20 and 34, thereby preventing dusts from entering into the switch case 10 from the penetrating portion of the shaft 41.

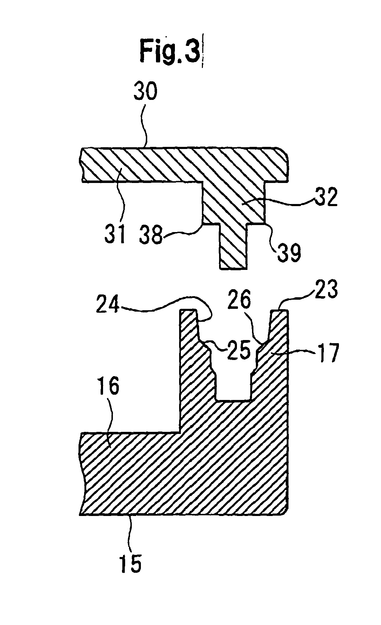

The side wall 17 of the base plate 15 surrounds and closes the entire circumference of the terminal block 16 and the upper end of the side wall 17 has a flat face in parallel to the inner wall surface of the terminal block 16, as well as a concave portion 24 is formed over the entire circumference of the side wall 17 on the upper end surface 23 (refer to Fig. 3). And the projecting portion 32 of the lid body 30 also surrounds and closes the entire circumference of the main body portion 31 and is fitted into the concave portion 24 of the side wall, and the projecting portion 32 and the side wall 17 are jointed by high-frequency welding, thus forming the switch case 10 with the base plate 15 integral with the lid body 30.

A bracket 3 for mounting is embedded partly in the base plate 15.

In more detail, in a state prior to welding, oblique faces 25 and 26 for welding are formed in an inner peripheral side and an outer peripheral side of the deep portion of the concave portion 24 of the side wall 17 as shown in Fig. 3 and shoulder portions 38 and 39 for welding are formed in an inner peripheral side and an outer peripheral side of the top end of the projecting portion 32 of the lid body 30 as shown in Fig. 3. When the an upper end surface 23 of the side wall 17 gets in contact with an inner wall surface of the main body portion 31 of the lid body 30, the shoulder portions 38 and 39 for welding of the projecting portion 32 are arranged to be interfered with the oblique surfaces 25 and 26 for welding of the concave portion 24 and the interfering portion is soldered by high-frequency welding, so that the projecting portion 32 and the side wall 17 are jointed across the entire circumference. Note that in this case, when the projecting portion 32 and the side wall 17 are jointed by high-frequency welding in a state the concave portion 24 is coated with grease, even if a micro non-jointing portion is produced due to variations of the welding state, sealing of the switch case 10 is certainly secured.

In particular, as shown in Fig. 2, stationary contact points are located in the terminal block 16 of the base plate 15 at necessary positions based upon the specification of a switch circuit as a setting possible range which is the range of 360° around the shaft hole 19, centered on the shaft hole 19. In the illustrated example, a group of the stationary contact points 50 are disposed on the circular arcs Ca to Cd of four rows in the angular range the same as conventional and further, the stationary contact points 51 and 52 are disposed at positions the angle deviates.

The stationary contact point 52 is on the circular Cf as opposite to the group of the stationary contact points 50 where the shaft hole 19 is placed between the stationary contact point 52 and the stationary contact points 50, and the stationary contact point 51 is set in the angular range between the group of the stationary contact points 50 and the stationary contact point 52. Each of the stationary contact points 50 to 52 has the circumferential length and the distance therebetween set corresponding to the specification of the switch circuit.

Each of the stationary contact points 50 and 52 has a connecting piece portion 54 extending to the connector 18 on an inner wall upper surface of the terminal block 16 or embedded into the terminal block 16, and the top end is a terminal (not shown) in the connector 18.

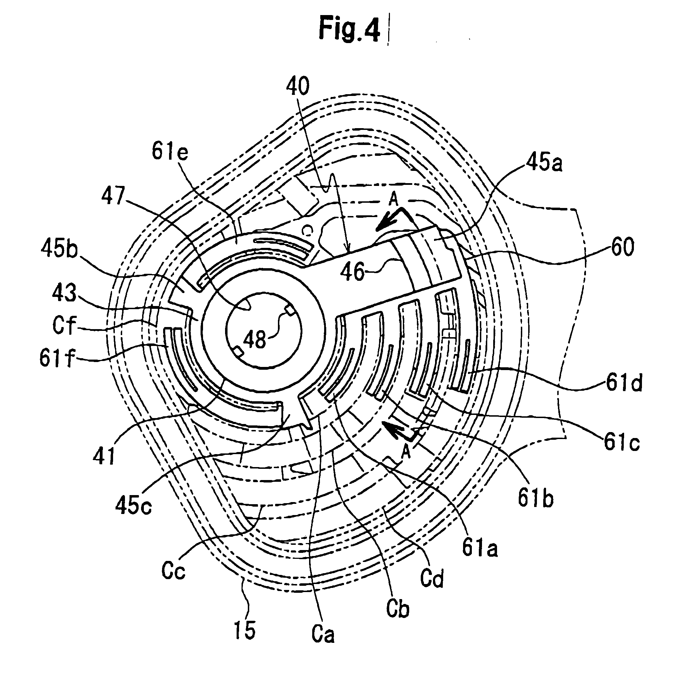

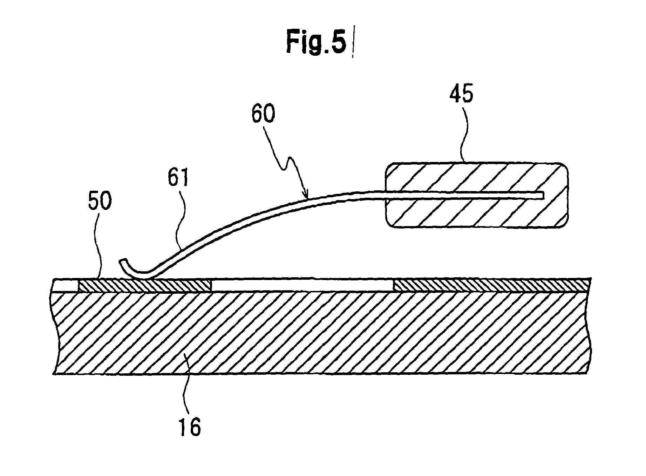

Fig. 4 is a plan view showing the movable plate and shows the base plate in an imaginary line. Fig. 5 is a cross-sectional view taken on lines A - A in Fig. 4.

The movable plate 40 is manufactured by an insert molding in which the movable contact point 60 is embedded. The movable contact point 60 is provided with slider pieces 61 (61a to 61f) having flexibility extending along the circular arc direction from the contact point support 45 (45a, 45b, 45c) so as to slidably contact the stationary contact points 50 to 52 on each circular arc corresponding to the circular arc rows Ca to Cd, and Cf of the terminal block 16.

Among them, the slider pieces 61a to 61d correspond to the group of the stationary contact points 50 on the circular arc rows Ca to Cd, the slider piece 61e corresponds to the stationary contact point 51 on the circular arc Ca, and the slider piece 61f corresponds slidably to the stationary contact point 52 on the circular arc Cf.

A predetermined slider pieces or all slider pieces are connected with each other at a root portion in the side of the contact point support 45 or inside the contact point support 45 in accordance with the specification of the switch circuit.

Note that, since the spacer portion 46 is formed in the contact point support 45a, even if a force to bend the contact point support 45 acts due to reaction generated when the flexible slider piece 61 is pushed on the stationary contact point 50, the spacer 46 contacts the inner wall surface of the main body portion 31 of the lid body 30, thus preventing deformation of the contact point support 45.

The inhibiter switch 1 as constituted above is mounted to the side of the automatic transmission by a bracket 3 by penetrating a rotating shaft in the side of the automatic transmission through the penetrating hole 47 of the shaft 41. The key projecting portion 48 of the penetrating hole 47 is engaged with the key groove (not shown) of the rotating shaft in the side of the automatic transmission and thereby, the shaft 41 becomes integral in a rotating direction with the rotating shaft in the side of the automatic transmission and as a result, the movable plate 40 rotates inside the switch case 10 together with rotation of the rotating shaft in the side of the automatic transmission.

The preferred embodiment is constituted as above where A rotary changeover switch according to the present invention comprises a base plate 15, a lid body 30 attached to the base plate 15, a switch case 10 formed of the base plate 15 and the lid body 30, a movable plate 40 disposed inside the switch case, the movable switch being rotated within a limited angular range, a plurality of stationary contact points disposed in an inner wall of the base plate 15, and a movable contact point disposed in the movable plate 40, the movable contact point being connected or disconnected to the stationary contact points depending on rotation of the movable plate 40, wherein the stationary contact points 50 to 52 are disposed around a rotating shaft of the movable plate 40, movable in the setting possible range of 360°. Accordingly the row number of the circular arcs having the stationary contact points can be reduced. Therefore, the distance from the shaft 41 to the circular arc Ce of the outermost stationary contact point does not increase and the whole size is reduced, thus reducing material expenses of the stationary contact points. Further, arrangement of multi-contact points is possible.

In addition, in the preferred embodiment, the base plate 15 and the lid body 30 forming the switch case 10 are jointed by high-frequency welding the concave portion 24 of the side wall 17 in the side of the base plate 15 with the projecting portion 32 of the lid body 30 where the side wall 17 is provided with the oblique surfaces 25 and 26 for welding at the inner peripheral side and the projecting portion 32 is provided with the shoulder portions 38 and 39 for welding at the outer peripheral side. Therefore, in particular the joint is strong and an accurate sealing effect can be obtained. The sealing effect is further improved together with grease coating.

In addition, since the movable contact point 60 is inserted into the contact point support 45, a labor for the assembly is not necessary and the change accuracy as a switch is high.

In the preferred embodiment, it is explained that a group of the stationary contact points 50 are located on the circular arcs Ca to Cd of four rows and the stationary contact points 51 and 52 correspond to the circular arcs Ca and Cf of each row, but each row number is not limited thereto, may be optionally set. The length and the arrangement of the stationary contact points on each row are exemplified as one example, not limited thereto.

Further, the preferred embodiment is applied to an inhibiter switch as one example, and the present invention may be applied to various kinds of rotary changeover switches.

This application claims priority to Japanese Patent Application No.2004-318719. The entire disclosure of Japanese Patent Application No.2004-318719 is hereby incorporated herein by reference.

While only the selected preferred embodiment has been chosen to illustrate the present invention, it will be apparent to those skilled in the art from this disclosure that various changes and modifications can be made therein without departing from the scope of the invention as defined in the appended claims. Furthermore, the foregoing description of the preferred embodiment according to the present invention is provided for illustration only, and not for the purpose of limiting the invention as defined by the appended claims and their equivalents.

## Claims

1. A rotary changeover switch, comprising:
a base plate;
a lid body attached to the base plate;
a switch case formed of the base plate and the lid body; a movable plate disposed inside the switch case, the movable switch being rotated within a predetermined angular range;
a plurality of stationary contact points disposed in an inner wall of the base plate; and
a movable contact point disposed in the movable plate, the movable contact point being connected or disconnected to the stationary contact points depending on rotation of the movable plate, wherein:
the plurality of the stationary contact points are disposed around a rotating shaft of the movable plate across a range beyond the predetermined angular range

2. The rotary changeover switch according to claim 1,
wherein:
the plurality of the stationary contact points are located in the setting possible range of 360° around a rotating shaft of the movable plate.
